# EUROPÄISCHE PATENTSCHRIFT

(11) **EP 1 358 993 B1**
(45) Veröffentlichungstag und Bekanntmachung des Hinweises auf die Patenterteilung: **30.12.2009**
(21) Anmeldenummer: 02009655.8
(22) Anmeldetag: 29.04.2002
(51) Int. Cl.: B29C 65/10

(54) **Vorrichtung zum Verschweissen von Kunststoffbahnen**
Apparatus for welding webs of plastic material
Dispositif pour souder des bandes en matériau plastique

(43) Veröffentlichungstag der Anmeldung: 05.11.2003
(73) Patentinhaber: Sika Technology AG, 6340 Baar (CH)
(72) Erfinder: Flück, Armin, 6064 Kerns (DE)
(74) Vertreter: Sika Patent Attorneys

(56) Entgegenhaltungen:
- EP-A- 0 914 935
- CH-A- 677 898
- US-A- 4 440 588

## Beschreibung

Die vorliegende Erfindung betrifft eine Vorrichtung zum Verschweissen von Folien bzw. Kunststoffbahnen gemäss dem Oberbegriff nach Anspruch 1.

Schweissgeräte zum Verschweissen von Kunststoffbahnen, wie insbesondere von Abdichtungsbahnen auf Hausdächern, Vordächern, an Betonbauten, in Bassins, in Ölwannen etc. sind bekannt.

Dabei wird von einem Heissluftgebläse heisse Luft von ca. 250 - 450°C durch eine flache Breitschlitzdüse zwischen die Folien im Bereich des Randabschlusses der einen, die andere Folie überlappenden Folie bzw. Kunststoffbahn geblasen, um die beiden Folien in diesem Bereich zu erweichen, d.h. an der Oberfläche zu plastifizieren. Mittels einer nachfolgenden Anpresswalze oder -rolle werden dann die beiden Folien miteinander verbunden bzw. verschweisst. So entsteht die sogenannte "Schweissnaht".

Es hat sich gezeigt, dass bei längerer Lagerung der Folien im Freien, unter Einfluss von Feuchtigkeit, Luftverschmutzung und Baustellenschmutz sich offenbar eine Art Alterungsschicht bildet, welche ein einwandfreies Verschweissen der beiden Folien kaum mehr ermöglicht.

Insbesondere bei der Verwendung eines derart bekannten Schweissgerätes, wie beispielsweise beschrieben im CH-Patent 677 898, zum Verschweissen von Folien aus Polyolefinen, hat sich die oben geschilderte Problematik eingestellt, was gelegentlich zum Versagen, d.h. Öffnen der Schweissnaht, führen kann.

Vorzugsweise zum Verschweissen von Polyolefin-Folien wird in der EP 0 914 935 vorgeschlagen, ein Schweissgerät zu verwenden, welches an einer schlitzartigen Heissluftdüse mindestens eine rollen- oder walzenartige Schleifeinrichtung aufweist, sowie Leit- oder Schleifbleche, um die zu verschweissenden Folien vor dem Zusammenfügen anzuschleifen. Vorzugsweise sind diese Leit- oder Schleifbleche direkt an der rollen- oder walzenartigen Einrichtung angeordnet.

Es hat sich nun gezeigt, dass bei der Verwendung eines Schweissgerätes gemäss EP 0 914 935 im Bereich der Schweissnaht die Gefahr einer Faltenbildung besteht, und zudem ist das erwähnte Schweissgerät nicht geeignet für die Verschweissung von Nicht-Polyolefin-Bahnen wie beispielsweise PVC-Bahnen.

Es ist daher eine Aufgabe der vorliegenden Erfindung, eine Schweissvorrichtung vorzuschlagen, mittels welcher das Verschweissen von Kunststoffbahnen, insbesondere hergestellt aus Polyolefinen oder anderen Polymeren, einwandfrei und ohne Faltenbildung ermöglicht wird.

Erfindungsgemäss wird die gestellte Aufgabe mittels einer Vorrichtung gemäss dem Wortlaut nach Anspruch 1 gelöst.

Vorgeschlagen wird eine Vorrichtung zum Verschweissen von Folien bzw. Kunststoffbahnen, aufweisend einen Heisslufterzeuger, und eine, eine schlitzartige Öffnung aufweisende Düse, vorgesehen, um die Heissluft zwischen zwei zu verschweissende Folien bzw. Kunststoffbahnen einzublasen. Die Vorrichtung zeichnet sich durch mindestens eine Schleifeinrichtung im Bereich der schlitzartigen Öffnung, oder dieser vorgelagert, aus, mittels welcher Schleifeinrichtung die zu verschweissenden bzw. zu verbindenden Oberflächen der Folien bzw. Kunststoffbahnen angeschliffen oder aufgerauht werden können. Bei dieser Schleifeinrichtung handelt es sich um eine rollenartige Schleifwalze, welche in Bearbeitungsrichtung nachgeschaltet zur Düse angeordnet ist, und entlang welcher Schleifwalze die erhitzten Folien bzw. Kunststoffbahnen geführt werden.

Im Unterschied zur Vorrichtung, wie in der EP 0 914 935 vorgeschlagen, ist die rollenartige Schleifwalze konisch bzw. kegelartig ausgebildet. Der grosse Vorteil bei der Verwendung der konisch ausgebildeten Walze liegt darin, dass zum Führen und Zusammenfügen der Folien keine Führungsbleche mehr verwendet werden müssen, und vor allem, dass beim Schweissen der beiden Folienbahnen keine Faltenbildung mehr beobachtet werden kann.

Vorzugsweise ist auch der Düsenschlitz entsprechend der konischen Ausbildung der Schleifwalze in Richtung zwischen die zu verschweissenden Bahnen gerichtet, zusammenlaufend ausgebildet.

Gemäss wieder einer weiteren Ausführungsvariante verläuft, in Draufsicht auf die Düse gesehen, die Düsenabschlusskontur weitgehendst parallel zur von der Düse entfernten vorderen Kante der Walze bzw. ist letztere gegebenenfalls leicht von der Düsenkante weg verlaufend ausgebildet.

Vorzugsweise ist die konische Walze wieder lösbar an der Düse angeordnet, so dass sie bei der Verschweissung unterschiedlicher Materialien wie PVC, Polyolefinen oder einem anderen Polymer rasch entfernt bzw. ausgewechselt werden kann.

Weitere bevorzugte Ausführungsvarianten der erfindungsgemässen Vorrichtung sind in den abhängigen Ansprüche 2 bis 9 charakterisiert.

Die Erfindung wird nun beispielsweise und unter Bezug auf die beigefügten Figuren näher erläutert. Dabei zeigen:
- Fig. 1: in Frontansicht, schematisch einen Schweissautomaten, beispielsweise bekannt aus der CH 677 898,
- Fig. 2: den Schweissautomaten aus Fig. 1 in Draufsicht von oben,
- Fig. 3: in Perspektive, eine Heissluftdüse, beispielsweise bekannt aus der CH 677 898,
- Fig. 4a und 4b: in Draufsicht von oben je eine Ausführungsvariante einer erfindungsgemässen Heissluftdüse,
- Fig. 5: die Heissluftdüse aus Fig. 4a in perspektivischer Ansicht von vorne gesehen, und
- Fig. 6: die Heissluftdüse von Fig. 4a in Draufsicht, wobei die vorgelagerte Walze entfernt ist.

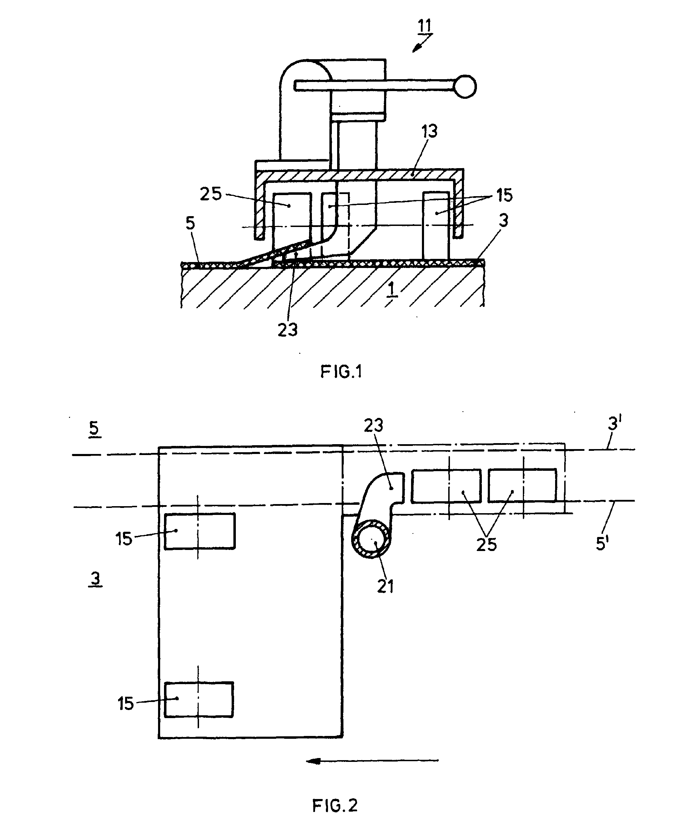

Fig. 1 zeigt in Ansicht von vorne einen Schweissautomaten zum Verschweissen zweier Kunststoffbahnen bzw. Abdichtungsbahnen im Bereich, wo sich die beiden abschliessenden Ränder überlappen.

Auf einer Unterlage 1, wie beispielsweise einem Flachdach, Garagendach, einem Bassinboden etc., sind zwei sich im Randbereich überlappende Folien bzw. Kunststoffbahnen 3 und 5 mittels Schweissen zu verbinden. Bei diesen Kunststofffolien kann es sich sowohl um Polyolefin-Folien handeln, wie auch um Folien aus einem anderen, geeigneten Kunststoff, wie z.B. P-PVC (Weich-PVC).

Im Randbereich der beiden Folien 3 und 5 erfolgt nun die Schweissung mittels eines Schweissautomaten 11, aufweisend eine Halterung bzw. ein Gehäuse 13, geführt auf Laufrollen 15. Eine Heissluftdüse 23 ragt in den überlappenden Bereich der Folien 3 und 5. Mittels einer der Düse 23 nachfolgenden Anpressrolle 25 werden die erhitzten und erweichten oder angeschmolzenen Oberflächen der beiden Bahnen 3 und 5 im Überlappungsbereich miteinander verpresst.

In Fig. 2 ist der Schweissautomat 11 in Ansicht von oben dargestellt, wobei die Arbeitsrichtung bzw. der Verschweissvorgang in Pfeilrichtung erfolgt. Dabei sind deutlich die Heissluftdüse 23 und nachfolgend die Anpressrollen 25 zum Verpressen der angeschmolzenen Kunststoffbahnen zu erkennen. Das Verpressen erfolgt im überlappenden Bereich, wobei in Fig. 2 die beiden Abschlussränder der überlappenden Kunststoffbahnen 3 und 5 mit 3' bzw. 5' bezeichnet sind.

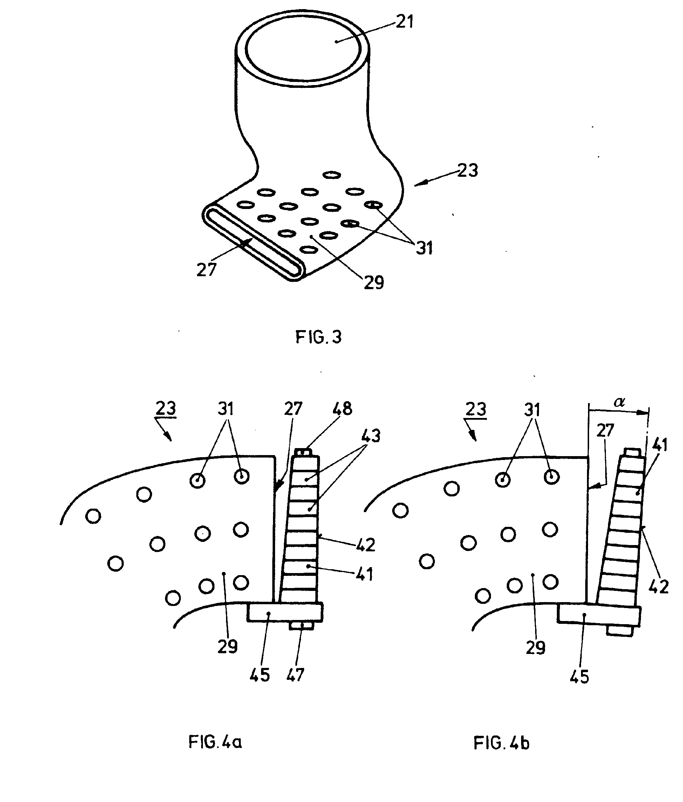

In Fig. 3 ist in Perspektive eine aus dem Stand der Technik bekannte Heissluftdüse 23 dargestellt, welche über einen Heissluftkanal 21 mit Heissluft gespiesen wird. Endständig ist eine Breitschlitzdüse 27 vorgesehen, durch welche die Heissluft zwischen die beiden zu verschweissenden Kunststofffolien geblasen wird. Zum Führen der Heissluft zwischen die beiden Folien weist die Düse 23 weiter einen flächigen Düsenkörper 29 auf, in welchem vorzugsweise nach oben und nach unten offene Perforierungen bzw. Kleinstlochungen 31 vorgesehen sind, zum "Vorwärmen" (Elastifizieren) der zu verschweissenden Folien.

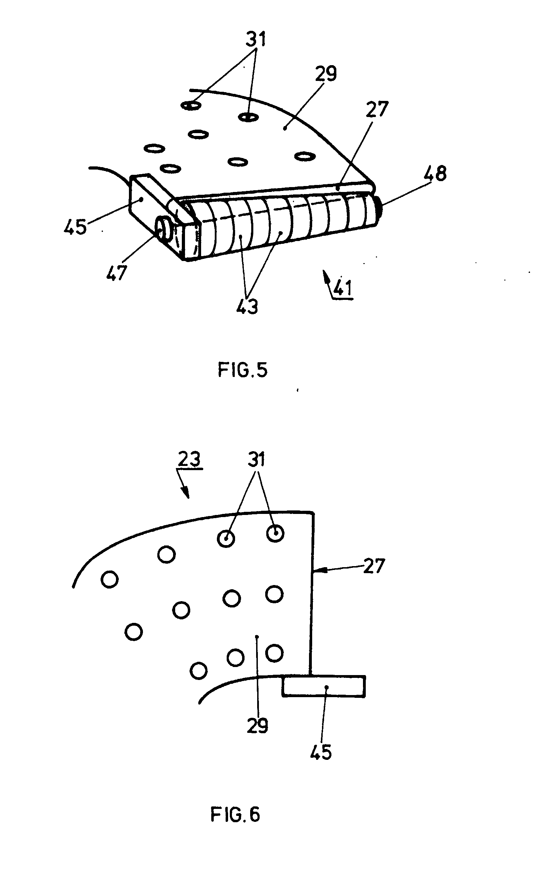

Die in den Fig. 1 bis 3 dargestellte Heissluftdüse wurde in der EP 0 914 935 dahingehend weiter entwickelt, in dem im Bereich der Öffnung oder dieser vorgelagert bzw. in Bearbeitungsrichtung nachgeschaltet eine walzen- oder rollenartige Schleifeinrichtung angeordnet wurde, um die zu verbindenden Oberflächen der Folie bzw. der Bahnen vor dem Zusammenpressen anzuschleifen oder anzurauhen. Dieses Anrauhen ergab insbesondere bei der Verwendung bzw. Verschweissung von Polyolefinen ein weitgehendst einwandfreies Verschweissen, insbesondere auch, falls die Oberflächen der Folien infolge Witterung, Staub, UV-Strahlung und dergleichen negativ beeinflusst waren. Allerdings ergab sich beim Verschweissen Faltenbildung, weshalb nun erfindungsgemäss eine konisch ausgebildete walzenartige Einrichtung vorgeschlagen wird, wie in den Fig. 4a, 4b und 5 dargestellt. Dabei zeigen Fig. 4a und 4b eine erfindungsgemäss ausgebildete Heissluftdüse 23, in Draufsicht von oben, aufweisend eine schlitzartige Öffnung 27 zum Ausgeben der Heissluft. Im Bereich der schlitzartigen Öffnung bzw. im Bereich des Düsenkörpers 29 sind in der Heissluftdüse wiederum nach oben und nach unten offene Perforierungen bzw. Kleinstlochungen 31 vorgesehen. Weiter ist vorgelagert zur schlitzartigen Öffnung 27 in Bearbeitungsrichtung nachgeschaltet eine Schleifwalze 41 angeordnet, welche durch mehrere, nebeneinander angeordnete Reibwalzen 43 gebildet wird. Die Schleifwalze 41 wird von einem seitlichen Haltebügel 45 gehalten, welcher seitlich an der schlitzartigen Öffnung 27 am Düsenkörper 29 befestigt ist. Die einzelnen Rollen bzw. Walzen 43 sind beispielsweise auf einem mittigen Haltestab oder Bügel 48 nebeneinander angeordnet, wobei die einzelnen Rollen vorzugsweise exzentrisch angeordnet sind, damit bei auftretenden Unebenheiten der Unterlage sich die einzelnen Walzen individuell an diese Unebenheiten anpassen können. Dieser Haltestab oder Bügel 48 ist beispielsweise wieder lösbar am seitlichen Haltebügel 45, beispielsweise mittels einer Klemmscheibe 47 befestigt. Selbstverständlich können anstelle einer Klemmscheibe auch andere wieder lösbare Befestigungsorgane verwendet werden.

In der Darstellung gemäss Fig. 4a verläuft die in Bearbeitungsrichtung frontseitige Kontur 42 der Schleifwalze 41 weitgehendst parallel zur Kontur der schlitzartigen Öffnung 27.

Es ist aber auch möglich, dass diese in Bearbeitungsrichtung frontseitige Kontur 42 der Schleifwalze 41 leicht von der Kontur der schlitzartigen Öffnung 27 gewinkelt weg verlaufend angeordnet ist, beispielsweise gewinkelt um den Winkel α, wie dargestellt in Fig. 4b.

Fig. 5 zeigt die erfindungsgemässe Ausführungsvariante der Düse aus Fig. 4a, in Perspektive gesehen gegen die schlitzartige Öffnung 27, wobei nun deutlich die schrägwinklig zueinander verlaufenden Wandungen der schlitzartigen Öffnung 27 erkennbar sind. Dabei verlaufen die Wandungen der Öffnung 27 vorzugsweise weitgehendst parallel zu den äusseren Konturen der konisch ausgebildeten Schleifwalze 41. Wiederum ist die Schleifwalze 41 durch mehrere nebeneinander angeordnete Walzen oder Rollen 43 gebildet, welche vorzugsweise exzentrisch auf dem mittigen Haltestab bzw. Haltebügel 48 angeordnet sind. Wiederum liegt der Vorteil dieser Ausführungsform darin, dass die Reib- oder Schleifwalze 41 Unebenheiten, herführend vom Untergrund, ausgleichen kann.

Falls nun unterschiedliche Materialien mit der erfindungsgemässen Düse zu verschweissen sind, wie beispielsweise Polyolefine, PVC oder andere Polymere, kann es vorteilhaft sein, dass die Schleifwalze 41 ersetzt oder gar vollständig entfernt werden kann, wie in Fig. 6 dargestellt. Letzteres vor allem bei der Verwendung von PVC-Folien, wo ein Anrauhen der Oberflächen vor dem Verschweissen nicht notwendig bzw. nicht unbedingt erwünscht ist. Dabei ist es möglich, dass die Schleifwalze 41 vom seitlichen Haltebügel 45 entfernt wird, oder aber, dass die Schleifwalze 41 zusammen mit dem seitlichen Haltebügel 45 gänzlich von der Düse 29 entfernt wird. In diesem Falle ist der seitliche Haltebügel 45 wieder lösbar mit der Düse 29 verbunden.

Bei den in den Fig. 4 - 6 dargestellten erfindungsgemässen Heissluftdüsen handelt es sich selbstverständlich nur um Beispiele. Insbesondere sei an dieser Stelle noch einmal auf die ältere EP 0 914 935 verwiesen, bei welcher die Verwendung einer Schleifwalze vorgeschlagen wird. Im weiteren ist zu ergänzen, dass anstelle der vorgeschlagenen Reibwalzen oder Reibrollen auch eine Art Kleinststahlbürstenrollen oder dergleichen verwendet werden können. Wesentlich ist, dass auch eine solche bürstenartige Vorrichtung konisch auszubilden ist. Weiter ist es auch möglich, anstelle einer Breitschlitzöffnung bei der Düse eine Anzahl individueller runder Düsenöffnungen nebeneinander anzuordnen. Wichtig ist, dass die Heissluft breitflächig je auf die Oberflächen der beiden zu verschweissenden Kunststofffolien eingeblasen wird. Bei der Verwendung mehrer Kleinstdüsenöffnungen kann es vorteilhaft sein, dass deren Durchmesser wiederum an die äussere Kontur der konischen Reib- bzw. Schleifwalze angepasst ist.

Ergänzend sei noch erwähnt, dass die erfindungsgemässe Vorrichtung selbstverständlich geeignet ist für die Verwendung bei x-beliebigen Heissluftgebläsen bzw. Schweissgeräten zum Verschweissen von Dichtungsbahnen, Kunststoffbahnen und dergleichen.

## Patentansprüche

1. Vorrichtung zum Verschweissen von Folien bzw. Kunststoffbahnen, aufweisend eine Heisslufterzeugung sowie eine für die Ausgabe der Heissluft vorzugsweise eine schlitzartige Öffnung (27) aufweisende Düse (23), vorgesehen um die Heissluft zwischen zwei zu verschweissende Folien bzw. Kunststoffbahnen (3, 5) einzublasen, wobei an der schlitzartigen Öffnung (27) vorgelagert bzw. dieser in Bearbeitungsrichtung nachgeschaltet eine rollen- oder walzenartige Schleifeinrichtung (41) vorgesehen ist, **dadurch gekennzeichnet, dass** die Schleifeinrichtung (41) kegelförmig bzw. konisch verjüngend ausgebildet ist.

2. Vorrichtung nach Anspruch 1, **dadurch gekennzeichnet, dass** die Wandungen der schlitzartigen Düse(27) in Richtung der zu verschweissenden Bahnen hin zusammenlaufend ausgebildet sind.

3. Vorrichtung nach einem der Ansprüche 1 oder 2, **dadurch gekennzeichnet, dass** die Wandungen der schlitzartigen Düse parallel je zur äusseren Kontur der konischen rollen- oder walzenartigen Schleifeinrichtung (41) verlaufend ausgebildet sind.

4. Vorrichtung nach einem der Ansprüche 1 bis 3, **dadurch gekennzeichnet, dass** die rollen- oder walzenartige Schleifeinrichtung (41) an einem seitlich von der schlitzartigen Düse (27) vorstehenden Halteorgan (45) wieder lösbar angeordnet ist, und/oder dass die rollen- oder walzenartige Schleifeinrichtung (41) zusammen mit dem seitlich von der schlitzartigen Düse 27 vorstehenden Halteorgan (45) wieder lösbar mit der Düse 23 verbunden ist.

5. Vorrichtung nach einem der Ansprüche 1 bis 4, **dadurch gekennzeichnet, dass** gesehen in Draufsicht auf die Düse (23) die von der Düse entferntere vordere Kante (42) der rollen- oder walzenartigen Schleifeinrichtung (41) weitgehendst parallel zur von oben gesehenen Düsenöffnungskontur verläuft.

6. Vorrichtung nach einem der Ansprüche 1 bis 4, **dadurch gekennzeichnet, dass** gesehen in Draufsicht auf die Düse (23) die von der Düse entfernte vordere Kontur der rollen- oder walzenartigen Schleifeinrichtung (41) leicht angewinkelt in Konusrichtung weg verlaufend zur von oben gesehenen Düsenöffnungskontur verläuft.

7. Vorrichtung nach einem der Ansprüche 1 bis 6, **dadurch gekennzeichnet, dass** die walzen- oder rollenartige Schleifeinrichtung (41) aus mehreren nebeneinander gereihten zylinderartigen Rollen oder Walzen (43) besteht, welche auf einem am Halteorgan (45) befestigten Quer- oder Haltestab (48) aufgereiht sind.

8. Vorrichtung nach einem der Ansprüche 1 bis 7, **dadurch gekennzeichnet, dass** die rollen- oder walzenartige Schleifeinrichtung (41) und/oder die nebeneinander gereihten zylinderartigen Rollen oder Walzen (43) eine aufgerauhte Oberfläche aufweisen bzw. aus nebeneinander angeordneten scheibenartigen, senkrecht zur Düse verlaufenden Schleifblechen gebildet werden.

9. Vorrichtung nach einem der Ansprüche 7 oder 8, **dadurch gekennzeichnet, dass** die Rollen oder Walzen je eine mittig exzentrisch ausgebildete Haltebohrung aufweisen, damit bei unebener oder unegaler Auflage sich die Rollen oder Walzen dieser anpassen können.

## Claims

1. Apparatus for welding sheets or webs of plastic material, having a hot air generator and a nozzle (23) for discharging hot air, preferably having a slit-like opening (27), provided for blowing the hot air between two sheets or webs of plastic material (3, 5) to be welded, a roller- or roll-like abrading device (41) being provided upstream of the slit-like opening (27) or downstream of it in the processing direction, **characterized in that** the abrading device (41) is formed as a cone or conically tapering.

2. Apparatus according to Claim 1, **characterized in that** the walls of the slit-like nozzle (27) are formed converging in the direction of the webs to be welded.

3. Apparatus according to either of Claims 1 and 2, **characterized in that** the walls of the slit-like nozzle are formed each running parallel to the outer contour of the conical roller- or roll-like abrading device (41).

4. Apparatus according to one of Claims 1 to 3, **characterized in that** the roller- or roll-like abrading device (41) is arranged re-releasably on a holding element (45) projecting laterally from the slit-like nozzle (27), and/or **in that** the roller- or roll-like abrading device (41) is connected together with the holding element (45) projecting laterally from the slit-like nozzle 27 re-releasably to the nozzle 23.

5. Apparatus according to one of Claims 1 to 4, **characterized in that**, viewing the nozzle (23) from above, the front edge (42), further away from the nozzle, of the roller- or roll-like abrading device (41) runs to the greatest extent parallel to the contour of the nozzle opening, viewed from above.

6. Apparatus according to one of Claims 1 to 4, **characterized in that**, viewing the nozzle (23) from above, the front edge, away from the nozzle, of the roller- or roll-like abrading device (41) runs slightly at an angle, running away in a conical direction from the contour of the nozzle opening, viewed from above.

7. Apparatus according to one of Claims 1 to 6, **characterized in that** the roller- or roll-like abrading device (41) comprises a number of cylinder-like rollers or rolls (43), which are arranged next to one another in series and are arranged in series on a transverse or holding rod (48) fastened to the holding element (45).

8. Apparatus according to one of Claims 1 to 7, **characterized in that** the roller- or roll-like abrading device (41) and/or the cylinder-like rollers or rolls (43) arranged next to one another in series have a roughened surface or are formed by disc-like grinding plates arranged next to one another, running perpendicular to the nozzle.

9. Apparatus according to either of Claims 7 and 8, **characterized in that** the rollers or rolls each have a holding bore formed eccentrically in the middle, in order that when there is uneven or irregular contact the rollers or rolls can adapt thereto.

## Revendications

1. Dispositif pour souder des films ou des bandes en matériau plastique, comprenant une production d'air chaud ainsi qu'une buse (23) présentant de préférence une ouverture en forme de fente (27) pour la sortie de l'air chaud, prévue pour insuffler l'air chaud entre deux films ou bandes en matériau plastique (3, 5) à souder, dans lequel il est prévu un dispositif de ponçage (41) en forme de rouleau ou de cylindre monté devant l'ouverture en forme de fente (27) ou placé après celle-ci dans la direction de traitement, **caractérisé en ce que** le dispositif de ponçage (41) se présente sous une forme conique ou diminuant en forme de cône.

2. Dispositif selon la revendication 1, **caractérisé en ce que** les parois de la buse en forme de fente (27) se rapprochent l'une de l'autre dans la direction des bandes à souder.

3. Dispositif selon l'une quelconque des revendications 1 ou 2, **caractérisé en ce que** les parois de la buse en forme de fente sont chacune orientées parallèlement au contour extérieur du dispositif de ponçage conique (41) en forme de rouleau ou de cylindre.

4. Dispositif selon l'une quelconque des revendications 1 à 3, **caractérisé en ce que** le dispositif de ponçage (41) en forme de rouleau ou de cylindre est disposé de nouveau de façon amovible sur un organe de support (45) saillant latéralement sur la buse en forme de fente (27), et/ou **en ce que** le dispositif de ponçage (41) en forme de rouleau ou de cylindre est assemblé à la buse (23) de nouveau de façon amovible avec l'organe de support (45) saillant latéralement sur la buse en forme de fente (27).

5. Dispositif selon l'une quelconque des revendications 1 à 4, **caractérisé en ce que**, dans une vue en plan de la buse (23), le bord avant (42), le plus éloigné de la buse, du dispositif de ponçage (41) en forme de rouleau ou de cylindre, est très largement parallèle au contour de l'ouverture de la buse vu par le dessus.

6. Dispositif selon l'une quelconque des revendications 1 à 4, **caractérisé en ce que**, dans une vue en plan de la buse (23), le bord avant, éloigné de la buse, du dispositif de ponçage (41) en forme de rouleau ou de cylindre est légèrement incliné dans la direction du cône et s'écarte du contour de l'ouverture de la buse vu par le dessus.

7. Dispositif selon l'une quelconque des revendications 1 à 6, **caractérisé en ce que** le dispositif de ponçage (41) en forme de rouleau ou de cylindre est composé de plusieurs rouleaux ou cylindres de forme cylindrique (43) alignés les uns à côté des autres, qui sont agencés sur une barre transversale ou de support (48) fixée sur l'organe de support (45).

8. Dispositif selon l'une quelconque des revendications 1 à 7, **caractérisé en ce que** le dispositif de ponçage (41) en forme de rouleau ou de cylindre et/ou les rouleaux ou cylindres de forme cylindrique (43) alignés les uns à côté des autres présentent une surface rugueuse ou sont formés par des tôles de ponçage en forme de disque, disposées les unes à côté des autres et orientées perpendiculairement à la buse.

9. Dispositif selon l'une quelconque des revendications 7 ou 8, **caractérisé en ce que** les rouleaux ou les cylindres présentent chacun un alésage de support réalisé en position excentrique, afin que les rouleaux ou les cylindres puissent s'y adapter en cas d'appui non plan ou inégal.
